# EUROPÄISCHE PATENTSCHRIFT

(11) **EP 2 982 100 B1**
(45) Veröffentlichungstag und Bekanntmachung des Hinweises auf die Patenterteilung: **12.06.2019**
(21) Anmeldenummer: 14718912.0
(22) Anmeldetag: 02.04.2014
(51) Int. Cl.: H04M 3/42, H04M 3/432, H04M 3/48

(54) **VERFAHREN ZUM AUFBAU EINER RÜCKRUFTELEKOMMUNIKATIONSVERBINDUNG**
METHOD FOR ESTABLISHING A CALLBACK TELECOMMUNICATION CONNECTION
PROCÉDÉ D'ÉTABLISSEMENT D'UNE LIAISON DE RAPPEL DE TÉLÉCOMMUNICATION

(30) Priorität: 05.04.2013 DE 102013006569; 12.06.2013 DE 102013009831
(43) Veröffentlichungstag der Anmeldung: 10.02.2016
(73) Patentinhaber: Unify GmbH & Co. KG, 80807 München (DE)
(72) Erfinder: POTT, Philipp, 81737 München (DE); AUGUSTIN, Stefan, 85635 Höhenkirchen (DE)
(74) Vertreter: Fritzsche, Thomas
(86) Internationale Anmeldenummer: PCT/EP2014/000881
(87) Internationale Veröffentlichungsnummer: WO 2014/161663

(56) Entgegenhaltungen:
- EP-A1- 0 557 777
- US-A1- 2005 063 527
- US-A1- 2006 093 116
- "Terrestrial Trunked Radio (TETRA); Voice plus Data (V+D); Part 10: Supplementary services stage 1; Sub-part 23: Call completion on no reply; ETS 300 392-10-23", IEEE, LIS, SOPHIA ANTIPOLIS CEDEX, FRANCE, Bd. TETRA;TETRA-3, Nr. Second Edition, 1. September 1999 (1999-09-01), XP014012948, ISSN: 0000-0001

## Beschreibung

Die Erfindung betrifft ein Verfahren zum Aufbau einer Telekommunikationsverbindung zwischen einem Rufteilnehmer und einem Zielteilnehmer, bei dem ein Rufendgerät des Rufteilnehmers und ein Zielendgerät des Zielteilnehmers einer Vermittlungseinrichtung zugeordnet sind und der Rufteilnehmer einen Rückrufwunsch in der Vermittlungseinrichtung hinterlegt, wenn das Zielendgerät bei einem vom Rufendgerät zum Zielendgerät aufgebauten ersten Ruf besetzt oder nicht erreichbar ist. Die Erfindung betrifft ferner eine Vermittlungseinrichtung zum Aufbau einer solchen Telekommunikationsverbindung.

Mittels der Rückruffunktionalität CCBS (Completion of Call to a Busy Subscriber) kann ein Anrufer, auch Rufteilnehmer genannt, einen Aufbau einer Telekommunikationsverbindung zu einem zwischenzeitlich besetzten Endgerät eines Angerufenen, auch Zielteilnehmer genannt, von einer Vermittlungseinrichtung vornehmen lassen. Ein Rufteilnehmer, der von dem Endgerät seines Zielteilnehmers bei einem ersten Ruf ein Besetztzeichen erhält, kann vor dem Beenden seines Rufs, beispielsweise durch Auflegen des Hörers, über die Tastatur seines Endgerätes oder durch eine Ansage einen Rückrufwunsch CCBS-REQ, auch Rückrufanforderung oder - aufforderung genannt, in der Vermittlungseinrichtung hinterlegen. Wird das zwischenzeitlich besetzte Endgerät des Zielteilnehmers frei, beispielsweise durch Beendigung eines über das Endgerät laufenden Gesprächs, erhält das Endgerät des Rufteilnehmers durch die Vermittlungseinrichtung über die Beendigung des über das Endgerät des Zielteilnehmers laufenden Gesprächs eine Information. Das Endgerät des Rufteilnehmers informiert nun den Rufteilnehmer mit einem Signal, beispielsweise einem besonderen Klingelton, dass das Endgerät des Zielteilnehmers nicht mehr besetzt ist. Der Ruf der Vermittlungseinrichtung an das Endgerät des Rufteilnehmers zur Information an den Rufteilnehmer, dass das Endgerät des Zielteilnehmers nicht mehr besetzt ist, wird als Rückruf bezeichnet. Nimmt der Rufteilnehmer diesen Rückruf entgegen, was beispielsweise durch Abnehmen eines Telefonhörers erfolgen kann, so wird der Zielteilnehmer durch die Vermittlungseinrichtung erneut gerufen. Der von der Vermittlungseinrichtung durchgeführte Ruf des Zielteilnehmers zum Aufbau einer Verbindung zwischen dem Rufteilnehmer und dem Zielteilnehmer wird als zweiter Ruf bezeichnet. CCBS kann nicht genutzt werden, wenn der Zielteilnehmer den von der Vermittlungseinrichtung aufgebauten Ruf abweist oder die Vermittlungsstelle des Zielteilnehmers Rückruffunktionalitäten nicht unterstützt.

Mittels der Rückruffunktionalität CCNR (Completion of Call on No Reply) kann ein Rufteilnehmer einen Aufbau einer Telekommunikationsverbindung zu einem Zielteilnehmer, der einen ersten Ruf des Rufteilnehmers nicht entgegennimmt, von einer Vermittlungseinrichtung vornehmen lassen. Ein Rufteilnehmer, dessen Zielteilnehmer ein Endgerät verwendet, das ein Freizeichen an den Rufteilnehmer meldet, wobei der Ruf des Rufteilnehmers nicht entgegengenommen wird, kann vor dem Beenden des ersten Rufs, beispielsweise durch Auflegen des Telefonhörers, über die Tastatur seines Endgerätes oder durch eine Ansage die Rückruffunktionalität CCNR durch Hinterlegen eines Rückrufwunsches CCNR-REQ in der Vermittlungseinrichtung aktivieren. Wenn der Zielteilnehmer nach Aktivierung von CCNR ein Gespräch beendet, beispielsweise durch Auflegen des Telefonhörers seines Endgerätes, erhält das Endgerät des Rufteilnehmers durch die Vermittlungseinrichtung über die Beendigung des Gesprächs des Zielteilnehmers eine Information. Das Endgerät signalisiert nun dem Rufteilnehmer mit einem Signal, beispielsweise einem besonderen Klingelton, dass das Endgerät des Zielteilnehmers erreichbar ist. Der Ruf der Vermittlungseinrichtung an das Endgerät des Rufteilnehmers zur Information an den Rufteilnehmer, dass das Endgerät des Zielteilnehmers erreichbar ist, wird vergleichbar zu der Definition des Rückrufs bei CCBS auch bei CCNR als Rückruf bezeichnet. Nimmt nun der Rufteilnehmer diesen Rückruf entgegen, beispielsweise durch Abnehmen des Hörers seines Endgerätes, so wird der Rufteilnehmer durch die Vermittlungseinrichtung in einem zweiten Ruf mit dem Endgerät des gewünschten Zielteilnehmers verbunden. CCNR kann nicht genutzt werden, wenn der Zielteilnehmer den von der Vermittlungseinrichtung aufgebauten Ruf abweist oder die Vermittlungsstelle des Zielteilnehmers Rückruffunktionalitäten nicht unterstützt. Rückrufwünsche CCBS-REQ, CCNR-REQ, die innerhalb der Rückruffunktionalitäten CCBS und/oder CCNR in der Vermittlungseinrichtung hinterlegt sind, werden bei Fehlschlagen des Rückrufs oder nach einer in der Vermittlungseinrichtung gespeicherten und vorbestimmten Zeitraum, beispielsweise eine Stunde, ohne Rückmeldung an den Rufteilnehmer in der Vermittlungseinrichtung gelöscht. Von einer herkömmlichen Vermittlungseinrichtung werden mehrere CCBS-REQ und/oder CCNR-REQ in der zeitlichen Reihenfolge ihrer Hinterlegung in der Vermittlungseinrichtung verarbeitet.

In EP 1 156 648 A2 ist ein Verfahren zur Herstellung einer Telekommunikationsverbindung beschrieben, bei dem ein als Antwort auf den gewünschten Rückruf von einem Rufendgerät zu einem Zielendgerät aufgebauter zweiter Ruf für den Fall, dass das Zielendgerät inzwischen erneut besetzt ist, zumindest für einen vorgegebenen Zeitraum in ein einer Vermittlungseinrichtung zugeordnetes Wartefeld gestellt wird, um darauf zu warten, dass das Zielendgerät erneut frei wird, ohne dass das Rufendgerät ein Besetztzeichen erhält. Für den Zeitraum, in dem der vom Rufendgerät an das Zielendgerät gerichtete zweite Ruf in das Wartefeld der Vermittlungseinrichtung gestellt ist, wird entweder ein Rufton, eine Wartemusik, eine Sprachansage oder ein anderes geeignetes Zeichen im Rufendgerät angeschaltet. Sobald das Zielendgerät innerhalb des vorgegebenen Zeitraums frei ist, wird im Rufendgerät die Verbindung zum Zielendgerät angezeigt. Nachteilig ist, dass das Rufendgerät für den Zeitraum, in dem der aufgebaute zweite Ruf in das Wartefeld der Vermittlungseinrichtung gestellt ist, für andere Rufteilnehmer besetzt ist, obwohl über die mit dem zweiten Ruf aufgebaute Verbindung nicht kommuniziert wird. Falls die Wartefrist zum erneuten Freiwerden des Zielendgerätes, also der vorgegebene Zeitraum, in dem der zweite Ruf in das Wartefeld der Vermittlungseinrichtung gestellt ist, erfolglos verstreicht, wird eine Verbindung zwischen dem Rufendgerät und dem Zielendgerät durch den gewünschten Rückruf nicht aufgebaut.

US 2005/063527 A1 betrifft ein Verfahren, das für jeden registrierten Benutzer ein Profil mit Filterungs- und Agenda-Daten aufweist und das den Zugänglichkeitszu stand jedes registrierten Benutzerterminals bestimmt und aktualisiert in Abhängigkeit davon, ob dieser über ein Netzwerk zugänglich ist oder nicht. Nach einem Anruf von einem Anrufer an den registrierten Benutzer wird ein Verfügbarkeitsstatus des angerufenen Benutzers auf der Basis der Profildaten des Angerufenen und einer Identifikation des Anrufers bestimmt, ob der Anrufer berechtigt ist, mit dem angerufenen Teilnehmer zu kommunizieren. Wenn der Angerufene nicht erreichbar ist oder nicht genehmigt, dass der Anrufer seinen Anruf vollendet, wird dem Anrufer vorgeschlagen, automatisch zu an dem gerufenen Teilnehmer durchgestellt zu werden, wenn der letztere für den Anrufer zugänglich und verfügbar ist und wenn dieser zustimmt, wird automatische ein Rückrufverfahren getriggert, die es ermöglicht, den Anruf des Anrufers zu den Angerufenen durchzustellen.

EEP 0 557 777 A1 betrifft eine Telekommunikationsanlage zur Verbindung von Kommunikations-Endgeräten, bei der eine die vermittlungstechnische Steuerung und Koordinierung durchführende zentrale Anlagensteuerung vorhanden ist, die einen Systemspeicher zur Speicherung der Programmmodule und die Anlagenkonfiguration, verbindungsindividuelle Informationen und teilnehmerseitig einzugebende Kennzeichen betreffende Daten und wenigstens einen Systemprozessor aufweist, dem unter Steuerung eines Betriebssystems die Programmodule zur Ausführung zugewiesen werden, wobei nach einem erfolglosen Verbindungsaufbau zwischen zwei angeschlossenen Kommunikationsendgeräten am rufenden Endgerät ein Rückrufauftrag in den Systemspeicher einspeicherbar ist, der die zentrale Anlagensteuerung veranlasst einen automatischen Verbindungsaufbau zwischen den betreffenden Kommunikationsendgeräten vorzunehmen. Abhängig von der vorliegenden Rückrufauftragsinformation nach dem Erkennen des Übergangs des ursprünglich erfolglos gerufenen Kommunikationsendgerätes in den Ruhezustand wird die Verbindungsaufbauprozedur für die Rückrufverbindung durch die zentrale Anlagensteuerung erst nach Ablauf einer vorbestimmten Verzögerungszeit eingeleitet.

Die US 2006/093116 A1 betrifft ein Verfahren zur Erleichterung der Kommunikation, bei dem eine Anzeige empfangen wird, dass ein Anrufer mit einem Angerufenen verbunden werden will. In Reaktion auf die Anzeige wird der Anrufer einer Warteschlange zugeordnet, die eine Prioritätenliste eines Vielzahl von Anrufern am dem Telefon speichert, die auf eine Verbindung mit dem angerufenen warten. In Reaktion auf eine Anzeige, dass der Angerufene erreichbar ist und, wenn der Anrufer die höchste Priorität in der Prioritätsliste hat, wird automatisch eine Anzeige an den Anrufer gegeben, dass der Angerufenen für einen Anruf verfügbar ist.

Ausgehend davon liegt der Erfindung die Aufgabe zugrunde, ein Verfahren zum Aufbau einer Telekommunikationsverbindung zu schaffen, das die Nachteile des Standes der Technik vermeidet. Insbesondere soll ein Verfahren zum Aufbau einer Telekommunikationsverbindung angegeben werden, bei dem eine Verbindung zwischen dem Rufteilnehmer und dem Zielteilnehmer über den vom Rufteilnehmer gewünschten Rückruf aufgebaut wird, wobei der Rufteilnehmer bis zum Aufbau der Verbindung zum Zielteilnehmer für andere Rufteilnehmer erreichbar bleibt.

Diese Aufgabe wird durch das Verfahren zum Aufbau einer Telekommunikationsverbindung mit den Merkmalen des unabhängigen Anspruchs gelöst. Eine Vermittlungseinrichtung zum Aufbau einer solchen Telekommunikationsverbindung ist in dem nebengeordneten Anspruch angegeben. Weiterbildungen der Erfindung sind Gegenstand der Unteransprüche.

Gemäß dem erfindungsgemäßen Verfahren zum Aufbau einer Telekommunikationsverbindung zwischen einem Rufteilnehmer und einem Zielteilnehmer, bei dem ein Rufendgerät des Rufteilnehmers und ein Zielendgerät des Zielteilnehmers einer Vermittlungseinrichtung zugeordnet sind und der Rufteilnehmer einen Rückrufwunsch in der Vermittlungseinrichtung hinterlegt, wenn das Zielendgerät bei einem vom Rufendgerät zum Zielendgerät aufgebauten ersten Ruf besetzt oder nicht erreichbar ist, werden Konfigurationsdaten in der Vermittlungseinrichtung über die Erreichbarkeit des Zielteilnehmers bei einem Rückruf hinterlegt. Anschließend wird der Zeitpunkt der Durchführung des von der Vermittlungseinrichtung durchzuführenden Rückrufes an den Rufteilnehmer zum Aufbau eines zweiten Rufes an den Zielteilnehmer durch Auswertung der Konfigurationsdaten über die Erreichbarkeit des Zielteilnehmers bei einem Rückruf festgelegt auf einen Zeitpunkt, zu dem der Zielteilnehmer bei einem Rückruf erreichbar ist. Zum festgelegten Zeitpunkt wird danach der von der Vermittlungseinrichtung durchzuführende Rückruf an den Rufteilnehmer durchgeführt. Die Aufgabe der vorliegenden Erfindung wird durch diese Vorrichtung aus denselben Gründen gelöst, wie diese weiter oben für das entsprechende Verfahren angegeben wurden. Im Unterschied zu herkömmlichen Verfahren zum Aufbau eines Rückrufes, bei denen der Zielteilnehmer lediglich durch Nichtannahme des Rückrufes seine Erreichbarkeit verhindern kann, erhält der Zielteilnehmer die Möglichkeit, durch die Hinterlegung von Konfigurationsdaten in der Vermittlungseinrichtung seine Erreichbarkeit für einen Rückruf bereits vor dem Rückruf festzulegen. Der Zeitpunkt des Rückrufes wird nicht mehr durch das Beenden des den Rückruf verhindernden Gesprächs des Zielteilnehmers festgelegt, sondern durch Auswertung der in der Vermittlungseinrichtung hinterlegten Konfigurationsdaten. Beispielsweise kann trotz eines Freizeichens im Endgerät des Zielteilnehmers ein Rückruf von der Vermittlungseinrichtung an den Rufteilnehmer unterbleiben, wenn zum Zeitpunkt des Freizeichens im Endgerät des Zielteilnehmers in den Konfigurationsdaten hinterlegt ist, dass ein Rückruf unterbleiben soll.

Ein Rückrufwunsch wird erfindungsgemäß von der Vermittlungseinrichtung in ein außerhalb der Vermittlungseinrichtung verwaltetes Terminplanungssystem oder Konferenzsystem übertragen. So kann ein Rückrufwunsch CCBS-REQ; CCNR-REQ als Terminwunsch oder als Terminanfrage von der Vermittlungseinrichtung in ein Terminplanungssystem, beispielsweise in einem Softwareprogramm wie Lotus Notes oder Microsoft Outlook, übertragen werden. Der Terminwunsch kann in Form eines Besprechungstermins in dem Terminplanungssystem hinterlegt werden, wobei die Hinterlegung in Form einer Email oder einer SMS (Short Message System) erfolgen kann.

In einer bevorzugten Ausgestaltung der Erfindung werden von der Vermittlungseinrichtung durchzuführende Rückrufe an zumindest zwei Rufteilnehmer zum Aufbau eines zweiten Rufes an den Zielteilnehmer durch Auswertung der Konfigurationsdaten über die Erreichbarkeit des Zielteilnehmers bei einem Rückruf priorisiert. Der Zeitpunkt der Durchführung des von der Vermittlungseinrichtung durchzuführenden Rückrufes an jeden der zumindest zwei Rufteilnehmer wird danach durch die priorisierte Reihenfolge der durchzuführenden Rückrufe festgelegt. In der Vermittlungseinrichtung werden mehrere Rückrufwünsche CCBS-REQ und/oder CCNR-REQ nicht lediglich in der zeitlichen Reihenfolge ihrer Hinterlegung in der Vermittlungseinrichtung verarbeitet, sondern die Reihenfolge der durchzuführenden Rückrufe wird durch Auswertung der Konfigurationsdaten von der Vermittlungseinrichtung festgelegt. Die Auswertung kann bei Vorliegen mehrerer Rückrufwünsche zum Aufbau eines zweiten Rufes an den Zielteilnehmer automatisch von der Vermittlungseinrichtung durchgeführt werden.

Vorteilhafterweise kann nach der Hinterlegung des Rückrufwunsches eine Rückmeldung der Vermittlungseinrichtung an den Rufteilnehmer über die Erreichbarkeit des Zielteilnehmers erfolgen. Durch Auswertung der Konfigurationsdaten kann die Vermittlungseinrichtung erkennen, zu welchen Zeiten die Wahrscheinlichkeit für einen erfolgreichen Verbindungsaufbau bei einem Rückruf nicht ausreichend ist. Die Vermittlungseinrichtung kann beispielsweise dem Rufteilnehmer unmittelbar nach Hinterlegung von dessen Rückrufwunsch in der Vermittlungseinrichtung eine Nachricht übermitteln, dass der Zielteilnehmer für die nächsten zwei Stunden nicht erreichbar ist. Die von der Vermittlungseinrichtung an den Rufteilnehmer rückgemeldete Nachricht erfolgt vor der Durchführung des Rückrufs und kann akustisch, zum Beispiel mittels Sprachgenerator, und/oder optisch, zum Beispiel als Text auf einer Anzeige des Endgerätes des Rufteilnehmers, erfolgen.

In einer weiteren Ausgestaltung der Erfindung sind die Konfigurationsdaten durch den Zielteilnehmer veränderbar. Der Zielteilnehmer kann beispielsweise bestimmte Zeitraume, auch "Communication-Time-Slots" genannt, in den Konfigurationsdaten angeben, zu denen er für einen Rückruf erreichbar ist. Der Zielteilnehmer hat die Möglichkeit, die Konfigurationsdaten zur Bestimmung der automatischen Rückrufpriorisierung auszulesen und zu verändern, und auf diese Weise die ihn betreffenden Rückrufe zu planen. Die Planung der Rückrufe steht dem Zielteilnehmer für die Rückruffunktionalität CCBS (CCBS-Planung) und CCNR (CCNR-Planung) über den Zugriff auf die in der Vermittlungseinrichtung hinterlegten Konfigurationsdaten offen. Der Zugriff auf die Konfigurationsdaten kann über die Tastatur des Endgerätes des Zielteilnehmers oder über die Tastatur eines mit der Vermittlungseinrichtung verbundenen Computers erfolgen. Bei einer in der Vermittlungseinrichtung vorhandenen Spracherkennungsfunktionalität kann der Zugriff auf die Konfigurationsdaten auch über das Endgerät des Zielteilnehmers oder ein mit dem Computer des Zielteilnehmers verbundenes Mikrofon mittels Sprachanweisungen erfolgen. Es ist auch möglich, dass ein Router zwischen dem Computer, über den der Zugriff auf die Konfigurationsdaten erfolgt, und der Vermittlungseinrichtung geschaltet ist. Die Vermittlungseinrichtung kann in einen Router integriert sein. Die Vermittlungseinrichtung kann in einem Hard- und Softwareelement oder ausschließlich in einem Softwareelement auf einem Computer oder Router ausgeführt sein. Neben dem Zielteilnehmer hat auch der Rufteilnehmer die Möglichkeit der CCBS-Planung und/oder der CCNR-Planung, beispielsweise durch Eingabe von Daten zu Zeiträumen in die Konfigurationsdaten, zu denen er für einen Rückruf erreichbar ist.

In die Konfigurationsdaten können mit Vorteil Daten über einen vorrangig rückzurufenden Rufteilnehmer aufgenommen werden. So kann der Zielteilnehmer sogenannte VIP-Rufteilnehmer (VIP: Very Important Person) in den Konfigurationsdaten definieren, die vor anderen Rufteilnehmern rückzurufen sind selbst dann, wenn ein anderer Rufteilnehmer seinen Rückruf früher als der VIP-Rufteilnehmer in der Vermittlungseinrichtung hinterlegt hat.

Vorzugsweise werden in die Konfigurationsdaten Daten über einen Zeitraum aufgenommen, in dem der Zielteilnehmer und/oder der Rufteilnehmer für Rückrufe erreichbar oder nicht erreichbar sind/ist. So können beispielsweise Gesprächsaktivitäten der Teilnehmer an der aufzubauenden Kommunikationsverbindung dadurch berücksichtigt werden, dass vor einem geplanten Anruf, auch Ruf genannt, und/oder nach einem getätigten Anruf für eine konfigurierbare Zeit kein Rückruf erfolgt. Sperrzeiten, in denen trotz im Endgerät vorhandenem Freizeichen kein Rückruf erfolgt, können vom Rufteilnehmer als auch vom Zielteilnehmer in den Konfigurationsdaten hinterlegt werden.

In einer vorteilhaften Ausgestaltung der Erfindung werden in die Konfigurationsdaten Daten über einen außerhalb der Vermittlungseinrichtung (extern) verwalteten Aktivitätsstatus des Zielteilnehmers und/oder des Rufteilnehmers über eine in der Vermittlungseinrichtung vorgesehene erste Schnittstelle aufgenommen. Mehrere durchzuführende Rückrufe an einen Zielteilnehmer werden beispielsweise durch Auswertung von extern verwalteten Aktivitätsmeldungen zu dem Rufteilnehmer und/oder dem Zielteilnehmer von der Vermittlungseinrichtung priorisiert.

Besonders vorteilhaft ist es, in die Aktivitätsstatusdaten Daten eines Terminkalenders des Zielteilnehmers und/oder des Rufteilnehmers aufzunehmen. Aktivitätsstatusmeldungen können Presence-Informationen, also Informationen über die Verfügbarkeit des Ruf- oder Zielteilnehmer zum aktuellen Zeitpunkt, oder beispielsweise Daten des Terminkalenders der jeweiligen Teilnehmer des aufzubauenden Rückrufs umfassen. Die Daten aus dem Terminkalender können aus Software-Programmen wie Lotus Notes oder Microsoft Outlook ausgelesen und den Konfigurationsdaten in der Vermittlungseinrichtung zugeführt werden. Der Zugriff auf die Aktivitätsstatusmeldungen kann durch die Vermittlungseinrichtung erfolgen, wobei beispielsweise die Zugriffszeitpunkte und Rechte für den Zugriff in der Vermittlungseinrichtung hinterlegt sind. Die hinterlegten Daten über den Zugriff können nur dem jeweils betroffenen Ruf- oder Zielteilnehmer oder bei Zustimmung des betroffenen Ruf- oder Zielteilnehmers einem Administrator zugänglich sein.

In die Aktivitätsstatusdaten können darüber hinaus Daten aufgenommen werden, die von einem Computer zur Erfassung und Meldung von Nutzeraktivitäten des Zielteilnehmers und/oder des Rufteilnehmers erzeugt werden. Aktivitätsstatusmeldungen können Daten umfassen, die von einer computerbasierten Einheit und/oder einem Softwareelement zur Erfassung und Meldung von Nutzeraktivitäten bereitgestellt werden. Beispielsweise kann aus der Beobachtung von Tastatureingaben in Verbindung mit der Analyse des Standortes aus einem Netzwerkstatus von der computerbasierten Einheit und/oder dem Softwareelement geschlossen werden, ob der Nutzer, der Zielteilnehmer ist, sich in seiner Büroumgebung befindet und für einen Rufteilnehmer erreichbar sein sollte. Sollte der Nutzer zum Zeitpunkt des Abrufens der Aktivitätsstatusdaten ein Softwareprogramm anwenden, mit dem eine Telefonkonferenz geführt werden kann oder die den Ablauf einer Telefonkonferenz unterstützt, beispielsweise das Programm Netmeeting, so ist anzunehmen, dass der Nutzer gerade an einer Telefonkonferenz teilnimmt und zu diesem Zeitpunkt eine Verbindung über einen Rückruf nicht zustande kommen soll. Andere Indikatoren für einen schlechten Zeitpunkt zum Aufbau einer Verbindung zum Zielteilnehmer mittels Rückruf können sein, dass der Nutzer sein Festnetztelefon zum Zeitpunkt des Abrufens der Aktivitätsstatusdaten auf ein Mobiltelefon weitergeschaltet hat oder dass Raumsensoren einen Besucher im Büro des Nutzers an die computerbasierte Einheit und/oder das Softwareelement zur Erfassung und Meldung von Nutzeraktivitäten melden. In einer weiteren Ausgestaltung der Erfindung besteht die Möglichkeit, bei mobilen Endgeräten über ein anwenderbezogenes Softwareprogramm, auch Client-Applikation genannt, Aktivitätsstatusmeldungen an die Vermittlungseinrichtung oder einen Presence-Server zur Speicherung und Weitergabe von Informationen über die Verfügbarkeit des Ruf- oder Zielteilnehmer zum aktuellen Zeitpunkt zu melden, der diese Aktivitätsstatusmeldungen an die Vermittlungseinrichtung weiterleitet. Beispielsweise kann bei einer Kabelverbindung oder einer Drahtlosverbindung zwischen einem mobilen Endgerät und einer Freisprecheinrichtung, die beispielsweise in einem Fahrzeug eingebaut ist, insbesondere bei einer Drahtlosverbindung über Bluetooth, die Aktivitätsstatusmeldung "im Fahrzeug" von der computerbasierten Einheit und/oder dem Softwareelement zur Erfassung und Meldung von Nutzeraktivitäten an die Vermittlungseinrichtung rückgemeldet werden. Zusätzlich kann mittels einer Verbindung mit einem im Fahrzeug vorhandenem Navigationsgerät von der computerbasierten Einheit und/oder dem Softwareelement zur Erfassung und Meldung von Nutzeraktivitäten die voraussichtliche Ankunftszeit des Fahrzeugführers bis zum Erreichen des Zielortes, beispielsweise dem Büro mit dem vom Rufteilnehmer gerufenen Endgerät, an die Vermittlungseinrichtung rückgemeldet werden.

Besonders vorteilhaft ist es, das Rufendgerät des Rufteilnehmers und das Zielendgerät des Zielteilnehmers vor dem Aufbau des durchzuführenden Rückrufs für verschiedene Rufe zu sperren. Von der Vermittlungseinrichtung werden als vorbereitende Maßnahme für einen Rückruf, beispielsweise durch eine Mutex-Funktion, andere eingehende Gespräche als der durchzuführende Rückruf an den Ruf- und Zielteilnehmer gesperrt. Durch die Unterdrückung eingehender Gespräche an den Ruf- und Zielteilnehmer vor dem Aufbau der Rückrufverbindung ist sichergestellt, dass zum Zeitpunkt des Aufbaus der Verbindung durch den Rückruf die Endgeräte beider Verbindungsteilnehmer freigeschaltet sind.

In einer weiteren bevorzugten Ausgestaltung der Erfindung kann ein hinterlegter Rückrufwunsch vor Durchführung des durchzuführenden Rückrufes von außerhalb der Vermittlungseinrichtung über eine in der Vermittlungseinrichtung vorgesehene zweite Schnittstelle gelöscht werden. Durch die Möglichkeit der Löschung eines in der Vermittlungseinrichtung hinterlegten Rückrufwunsches CCBS-REQ; CCNR-REQ bereits vor der Durchführung des Rückrufes, auch CCBS- oder CCNRcancellation genannt, können vom Rufteilnehmer unbeabsichtigte Rückrufe vermieden werden. Beispielsweise kann bei der Ausführung eines Geschäftsprozesses, durch den ein Rückrufwunsch in der Vermittlungseinrichtung hinterlegt wurde, nach der Hinterlegung des Rückrufwunsches keine Interesse mehr an einem Verbindungsaufbau zum Zielteilnehmer bestehen, wenn bei der Ausführung des Geschäftsprozesses ein anderer Gesprächsteilnehmer kontaktiert wurde. CEBP-Prozesse (Communication Embedded Business Processes), bei denen automatisiert Telefonverbindungen ausgeführt werden, können Geschäftsprozesse sein oder einschließen, bei denen im Prozessablauf nach Hinterlegung eines Rückrufwunsches bereits weitere Prozessschritte oder Kommunikationsschritte stattgefunden haben, die einen Rückruf unnötig machen.

Erfindungsgemäß ist zudem eine Vermittlungseinrichtung zum Aufbau einer Telekommunikationsverbindung zwischen einem Rufteilnehmer und einem Zielteilnehmer vorgesehen, bei der ein Rufendgerät des Rufteilnehmers und ein Zielendgerät des Zielteilnehmers der Vermittlungseinrichtung zugeordnet sind und ein Rückrufwunsch von dem Rufteilnehmer in der Vermittlungseinrichtung hinterlegbar ist, wenn das Zielendgerät bei einem vom Rufendgerät zum Zielendgerät aufgebauten ersten Ruf besetzt oder nicht erreichbar ist, wobei die Vermittlungseinrichtung eine erste Speichereinheit zur Hinterlegung von Konfigurationsdaten über die Erreichbarkeit des Zielteilnehmers bei einem Rückruf umfasst. Die Vermittlungseinrichtung umfasst zudem eine Auswerteeinheit zur Festlegung des Zeitpunktes der Durchführung des von der Vermittlungseinrichtung durchzuführenden Rückrufes an den Rufteilnehmer zum Aufbau eines zweiten Rufes an den Zielteilnehmer durch Auswertung der Konfigurationsdaten über die Erreichbarkeit des Zielteilnehmers bei einem Rückruf auf einen Zeitpunkt, zu dem der Zielteilnehmer bei einem Rückruf erreichbar ist. Die Vermittlungseinrichtung ist so ausgeführt, dass der von der Vermittlungseinrichtung durchzuführende Rückruf an den Rufteilnehmer zum festgelegten Zeitpunkt erfolgt.

Die Auswerteeinheit ist in einer bevorzugten Ausführungsform so ausgeführt, dass von der Vermittlungseinrichtung durchzuführende Rückrufe an zumindest zwei Rufteilnehmer zum Aufbau eines zweiten Rufes an den Zielteilnehmer durch Auswertung der Konfigurationsdaten über die Erreichbarkeit des Zielteilnehmers bei einem Rückruf priorisierbar sind. Der Zeitpunkt der Durchführung des von der Vermittlungseinrichtung durchzuführenden Rückrufes an jeden der zumindest zwei Rufteilnehmer zum Aufbau des zweiten Rufes an den Zielteilnehmer ist dann durch die priorisierte Reihenfolge der durchzuführenden Rückrufe festgelegt. Mit der Erfindung erhält die Vermittlungseinrichtung die Möglichkeit der Priorisierung der in der Vermittlungseinrichtung hinterlegten Rückrufe. Bei mehreren Rückrufwünschen zum Aufbau einer Verbindung zu einem Zielteilnehmer können automatisch die Terminsituation und die aktuelle Verfügbarkeit, auch Presence-Situation genannt, bereits vor der Durchführung eines Rückrufes von der Vermittlungseinrichtung berücksichtigt werden, wodurch unnötige Ruckrufversuche vermieden werden. Rückrufwünsche können von der Vermittlungseinrichtung höher priorisiert werden, wenn einer der Rückrufteilnehmer unmittelbar vor dem Zeitpunkt der Priorisierung in einer laufenden Verbindung kommuniziert und somit in seinem Büro und über das im Büro angeordnete Endgerät erreichbar ist. Die zeitliche Planung des Aufbaus der Verbindung durch den zweiten Ruf wird nicht auf den aktuellen Zeitpunkt oder einen bestimmten zukünftigen Zeitpunkt beschränkt, sondern auf den aussichtsreichsten Zeitpunkt für einen erfolgreichen zweiten Ruf mittels eines Rückrufs, der auf die individuelle Situation jedes Rückrufteilnehmers angepasst ist, erweitert.

In einer vorteilhaften Ausführungsform ist der Rückrufwunsch in Form eines von der Vermittlungseinrichtung durchzuführenden Rückrufs in einer Rückrufliste in einer zweiten Speichereinheit der Vermittlungseinrichtung gespeichert. Die Rückrufliste umfasst hierbei von der Vermittlungseinrichtung durchzuführende Rückrufe zum Aufbau eines zweiten Rufes an den Zielteilnehmer. In der Rückrufliste sind sämtliche Rufteilnehmer zu einem Zielteilnehmer gespeichert. Auf die zweite Speichereinheit kann von außerhalb der Vermittlungseinrichtung zugegriffen werden, um in der Rückrufliste gespeicherte Rückrufe vor deren Durchführung zu löschen. Die Rückrufliste wird von der Auswerteinheit ständig aktualisiert, wobei die Auswerteeinheit die Rückrufliste bei einer Priorisierung der Rückrufe entsprechend ändert, Rückrufe mit höchster Priorität der Rückrufliste entnimmt und verarbeitet und durchgeführte Rückrufe in der Rückrufliste löscht.

Weitere Ausführungsbeispiele sowie Vorteile der Erfindung werden nachfolgend anhand der Figuren erläutert. Zur besseren Anschaulichkeit wird in den Figuren auf eine maßstabs- oder proportionsgetreue Darstellung verzichtet. In den Figuren bezeichnen, sofern nicht anders angegeben, gleiche Bezugszeichen gleiche Bauteile mit gleicher Bedeutung. Es zeigen:
- Fig. 1: einen zeitlichen Verlauf einer Kommunikation zwischen vier Rufteilnehmern, die jeweils einen Rückrufwunsch in einer Vermittlungseinrichtung zum Aufbau einer Verbindung zu dem gleichen Zielteilnehmer hinterlegt haben, und dem Zielteilnehmer, und
- Fig. 2: einen schematischen Aufbau einer Vermittlungseinrichtung nach einem Ausführungsbeispiel der Erfindung.

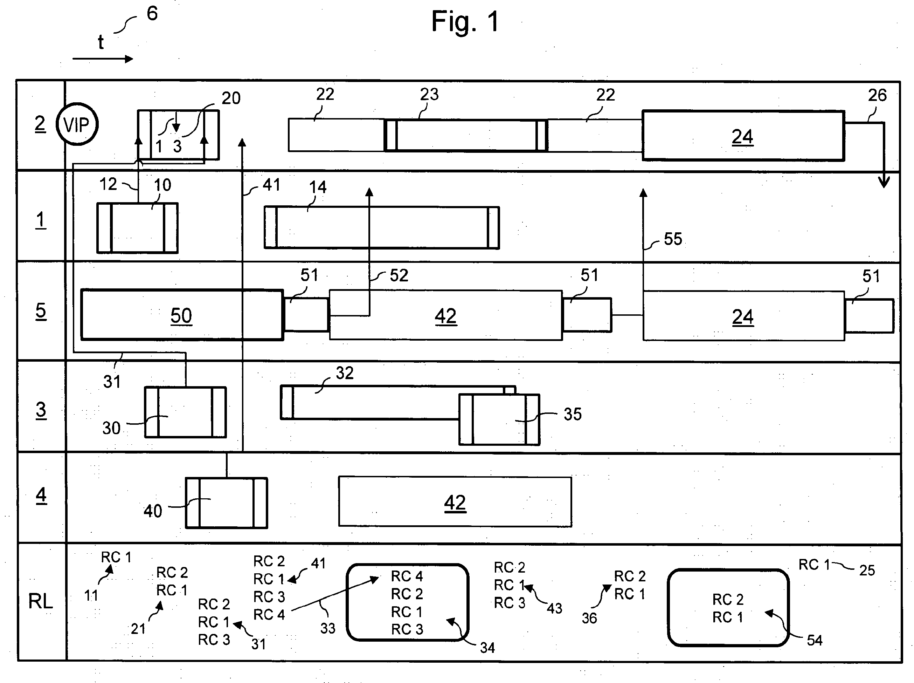

Die Erfindung wird nun am Beispiel einer Kommunikation zwischen mehreren Rufteilnehmern, die den gleichen Zielteilnehmer erreichen möchten, und dem Zielteilnehmer erläutert. Figur 1 zeigt dazu den zeitlichen Verlauf einer Kommunikation zwischen vier Rufteilnehmern 1, 2, 3, 4, die jeweils einen Rückrufwunsch 10, 20, 30, 40 in einer Rückrufliste RL einer Vermittlungseinrichtung zum Aufbau einer Verbindung zu dem gleichen Zielteilnehmer 5 hinterlegt haben, und den Zielteilnehmer 5. Fig. 1 ist in sechs Zeilen untergliedert, die von oben nach unten den Kommunikationsverlauf der Rufteilnehmer 2, 1, des Zielteilnehmers 5, der Rufteilnehmer 3, 4 und der in der Rückrufliste RL eingetragenen Rückrufe RC1, RC2, RC3, RC4 schematisch darstellen. Die Zeitachse 6 ist in Fig. 1 von links beginnend nach rechts aufgetragen.

Zu Beginn der Kommunikation zwischen den Rufteilnehmern 1, 2, 3, 4 und dem Zielteilnehmer 5 führt der Zielteilnehmer ein Telefonat 50 mit einem anderen als dem Rufteilnehmer 1, 2, 3, 4, so dass das Endgerät des Zielteilnehmers 5 an die Endgeräte der Rufteilnehmer 1, 2, 3, 4 jeweils ein Besetztzeichen sendet. Der Zielteilnehmer 5 könnte auch einen Geschäftstermin außerhalb seines Büros wahrnehmen und deshalb nicht erreichbar sein. In diesem Fall sendet das Endgerät des Zielteilnehmers 5 an die Endgeräte der Rufteilnehmer 1, 2, 3, 4 jeweils ein Freizeichen. Rufteilnehmer 1 möchte eine Verbindung zum Zielteilnehmer 5 aufbauen und hinterlegt, da das Endgerät des Zielteilnehmers 5 besetzt ist, einen Rückrufwunsch 10 in Form eines Rückrufs RC1 in der Rückrufliste RL der Vermittlungseinrichtung. In der Rückrufliste RL ist lediglich ein Rückruf RC 1 als Element 11 gespeichert.

In der weiteren zeitlichen Abfolge möchte Rufteilnehmer 2 eine Verbindung zum Zielteilnehmer 5 aufbauen und initiiert, wie Pfeil 12 zeigt, einen Rückrufwunsch 20, der kurze Zeit später, wie Pfeil 13 zeigt, in Form eines Rückrufs RC2 in der Rückrufliste RL gespeichert wird. Rufteilnehmer 2 ist für den Zielteilnehmer 5 eine besonders wichtige Person (VIP) und daher ein für den Zielteilnehmer 5 vorrangig zurückzurufender Rufteilnehmer. Die Information, dass der Rufteilnehmer 2 für den Zielteilnehmer 5 ein vorrangig zurückzurufender Rufteilnehmer ist, ist in den Konfigurationsdaten der Vermittlungseinrichtung hinterlegt und führt dazu, dass der durchzuführende Rückruf RC2 in der Auflistung 21 der Rückrufliste RL gegenüber RC1 priorisiert wird, obwohl der Rückruf RC2 später als der Rückruf RC1 in der Rückrufliste RL hinterlegt wurde.

Das Endgerät des Zielteilnehmers 5 ist weiter besetzt und so wird vom Rufteilnehmer 3 der Rückrufwunsch 30 nach der Initiierung des Rückrufwunsches 20 (siehe Pfeil 31) initiiert und in der Auflistung 31 als durchzuführender Rückruf RC3 den durchzuführenden Rückrufen RC2 und RC1 nachfolgend hinterlegt. Das Endgerät von Zielteilnehmer 5 ist noch immer besetzt und so wird vom Rufteilnehmer 4 der Rückrufwunsch 40 nach der Initiierung des Rückrufwunsches 30 (siehe Pfeil 41) initiiert und in der Auflistung 31 als letzter Rückruf RC4 nachfolgend den durchzuführenden Rückrufen RC2, RC1 und RC3 hinterlegt. Zum Zeitpunkt der Hinterlegung des Rückrufs RC4 lautet die Reihenfolge der durchzuführenden Rückrufe in der Auflistung 41 RC2, RC1, RC3, RC4. Die Hinterlegung der Rückrufe RC1, RC2, RC3 und RC4 erfolgt bei der in Fig. 1 geschilderten Kommunikation als Rückruffunktionalität CCBS. Daneben oder alternativ können die Rückrufe RC1, RC2, RC3 und RC4 auch als Rückruffunktionalität CCNR erfolgen.

Nach Beendigung des Telefonats 50 folgt eine Sperrzeit 51, in der der Zielteilnehmer 5 für Rückrufe nicht erreichbar ist. Die Sperrzeit 51 folgt unmittelbar nach dem Ende jedes Gesprächs 50, 42, 24 des Zielteilnehmers 5 und ist in Form von Konfigurationsdaten in der Vermittlungseinrichtung hinterlegt. Das Endgerät des Zielteilnehmers 5 ist daher trotz beendeten Telefonats 50 für Rückrufe für die Dauer der Sperrzeit 51 nicht erreichbar. Zum Zeitpunkt des Endes der Sperrzeit 51 ist das Endgerät des Rufteilnehmers 2 für Rückrufe gesperrt. Der Rufteilnehmer 2 hat in die Konfigurationsdaten Daten aufgenommen, die vor dem Beginn und nach dem Ende einer Telefonkonferenz 23 Sperrzeiten 22 für Rückrufe vorsehen. Zum Zeitpunkt des Endes der Sperrzeit 51 des Zielteilnehmers 5 hat die Telefonkonferenz 23 noch nicht begonnen. Da aber der Termin der Telefonkonferenz 23 und die Sperrzeiten 22 vor Beginn und nach Beendigung der Telefonkonferenz 23 in den Konfigurationsdaten der Vermittlungseinrichtung hinterlegt sind, ist der Rufteilnehmer 2 bei Beendigung der Sperrzeit 51 für Rückrufe nicht erreichbar. Die Konfigurationsdaten umfassen auch Aktivitätsstatusdaten des Rufteilnehmers 1 der Gestalt, dass nach dem Terminkalender 14 des Rufteilnehmers 1 im Programm Microsoft Outlook der Rufteilnehmer 1 abwesend ist. Weiter liegen in den Konfigurationsdaten Aktivitätsstatusdaten vor, dass der Rufteilnehmer 3 zum Zeitpunkt des Endes der Sperrzeit 51 das Programm Netmeeting 32 anwendet und davon auszugehen ist, dass der Rufteilnehmer 3 sich gerade in einer Telefonkonferenz befindet und durch Rückrufe nicht gestört werden möchte. Die Vermittlungseinrichtung priorisiert wegen der nicht vorhandenen Verfügbarkeit der Rufteilnehmer 2, 1 und 3 für Rückrufe den durchzuführenden Rückruf RC4 des Rufteilnehmers 4 hoch (siehe Pfeil 33). Nach der Auflistung 34 lautet die Reihenfolge der durchzuführenden Rückrufe zum Zeitpunkt der Beendigung der Sperrzeit 51 RC4, RC2, RC1 und RC3. Rufteilnehmer 4 ist erreichbar und die Vermittlungseinrichtung führt gemäß der vorgenommenen Priorisierung den durchzuführenden Rückruf RC4 aus, der zum Rückruf von Rufteilnehmer 4 und zum zweiten Ruf 42 an den Zielteilnehmer 5 durch die Vermittlungseinrichtung führt. In der Rückrufliste RL lautet nach dem Aufbau der Verbindung zwischen dem Rufteilnehmer 4 und dem Zielteilnehmer 5 die Reihenfolge der Auflistung 43 der durchzuführenden Rückrufe RC2, RC1, RC3.

Während des zweiten Rufs 42 von Rufteilnehmer 4 an den Zielteilnehmer 5 führt der Rufteilnehmer 3 eine Löschung 35 seines durchzuführenden Rückrufes RC3 in der Rückrufliste RL aus. Die Löschung erfolgt beispielsweise aus dem Grund, dass der Rufteilnehmer 3 in der Telefonkonferenz, die er mit dem Programm Netmeeting 32 begleitet hat, erfahren hat, dass der Grund für den Rückruf des Zielteilnehmers 5 entfallen ist. Nach der Löschung lautet die Reihenfolge in der Auflistung 36 der durchzuführenden Rückrufe RC2, RC1.

Nach Beendigung des zweiten Rufs 42 schließt sich, wie oben ausgeführt, bei dem Zielteilnehmer 5 die in den Konfigurationsdaten vorgesehene Sperrzeit 51 für Rückrufe an. Zum Zeitpunkt des Endes der Sperrzeit 51 ist das Endgerät des Rufteilnehmers 2 wegen einer sich an die Telefonkonferenz 23 anschließende Sperrzeit 22, wie oben ausgeführt, besetzt. Der Rufteilnehmer 1 ist bei Beendigung der Sperrzeit 51 erreichbar. Wegen der Priorisierung des durchzuführenden Rückrufs RC2 des Rufteilnehmers 2, der als vorrangig zurückzurufender Rufteilnehmer in den Konfigurationsdaten für den Zielteilnehmer 5 vorgesehen ist, in der Auflistung 54 der Rückrufliste RL wird der durchzuführende Rückruf RC1 trotz Erreichbarkeit des Rufteilnehmers 2 nicht durchgeführt. Die Vermittlungseinrichtung wartet gemäß der Reihenfolge der Durchführung der durchzuführenden Rückrufe in der Auflistung 54 ab, bis die in den Konfigurationsdaten gespeicherte Sperrzeit 22 abgelaufen ist (siehe Pfeil 55). Anschließend führt die Vermittlungseinrichtung den Rückruf an den Rufteilnehmer 2 durch, der zum zweiten Ruf 24 an den Zielteilnehmer 5 führt, und löscht den durchzuführenden Rückruf RC2 in der Auflistung 25 der Rückrufliste RL. Nach Beendigung des zweiten Rufs 24 ist in der Auflistung 25 RC1 als einziger durchzuführender Rückruf enthalten. Die Vermittlungseinrichtung führt nach dem Ende der Sperrzeit 51 den durchzuführenden Rückruf RC1 aus (siehe Pfeil 26). Nach dem Aufbau des zweiten Rufs 24 zwischen dem Rufteilnehmer 2 und dem Zielteilnehmer 5 wird der durchzuführende Rückruf RC2 in der Rückrufliste RL von der Vermittlungseinrichtung gelöscht.

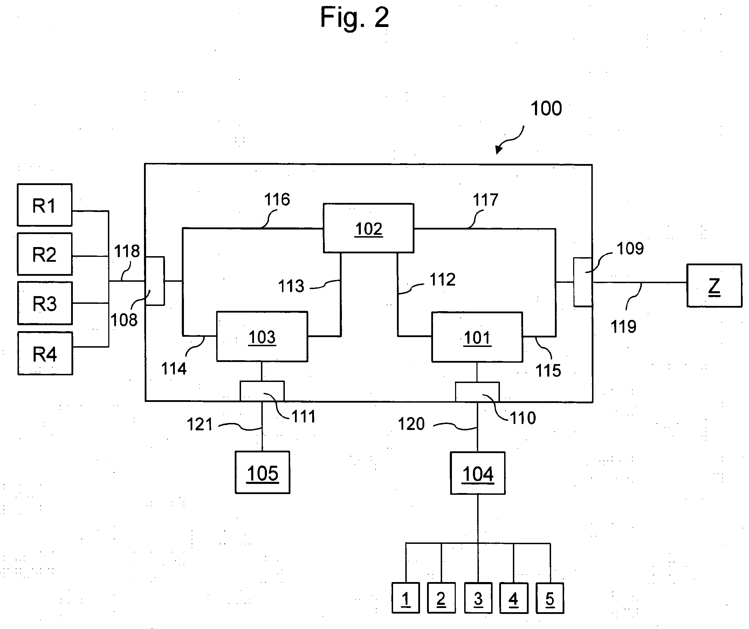

Figur 2 zeigt einen schematischen Aufbau einer erfindungsgemäßen Vermittlungseinrichtung. Der Vermittlungseinrichtung 100 sind mehrere Rufendgeräte R, von denen jeder Rufteilnehmer 1, 2, 3, 4 jeweils ein Rufendgerät R verwendet, und ein Zielendgerät Z des Zielteilnehmers 5 zugeordnet. Zur Unterscheidbarkeit der Rufendgeräte R der jeweiligen Rufteilnehmer 1, 2, 3, 4 folgen den Bezugszeichen R der Rufendgeräte die Bezugszeichen der Rufteilnehmer 1, 2, 3, 4. Das Rufendgerät Z des Zielteilnehmers 5 ist über eine Leitung 119 und eine Schnittstelle 109 mit einer Auswerteinheit 102 und einer ersten Speichereinheit 101 verbunden. Die Rufendgeräte R1, R2, R3, R4 sind über eine Leitung 118 und eine Schnittstelle 108 mit einer Auswerteinheit 102 und einer zweiten Speichereinheit 103 verbunden.

Wenn das Zielendgerät Z bei einem ersten Ruf von einem der Rufendgeräte R1, R2, R3, R4 zum Zielendgerät Z besetzt oder nicht erreichbar ist, initiiert der Rufteilnehmer 1, 2, 3, 4 einen Rückrufwunsch CCBS-REQ; CCNR-REQ, der über die Leitung 118, die Schnittstelle 108 und eine Leitung 114 in die zweite Speichereinheit 103 der Vermittlungseinrichtung 100 übertragen wird. In der zweiten Speichereinheit wird, wie zu Fig. 1 oben ausgeführt, der Rückrufwunsch CCBS-REQ; CCNR-REQ in Form eines von der Vermittlungseinrichtung 100 durchzuführenden Rückrufs RC (nicht dargestellt) in einer Rückrufliste RL (nicht dargestellt) gespeichert. Die Rückrufliste RL umfasst von der Vermittlungseinrichtung 100 durchzuführende Rückrufe RC zum Aufbau eines zweiten Rufes an den Zielteilnehmer 5, wobei insbesondere sämtliche durchzuführenden Rückrufe RC an einen Zielteilnehmer 5 von der Rückrufliste RL umfasst sind und in der zweiten Speichereinheit 103 gespeichert werden.

Die Vermittlungseinrichtung 100 umfasst eine Auswerteeinheit 102 zur Festlegung des Zeitpunktes der Durchführung des von der Vermittlungseinrichtung 100 durchzuführenden Rückrufes RC an jeden Rufteilnehmer 1, 2, 3, 4 zum Aufbau eines zweiten Rufes an den Zielteilnehmer 5 durch Auswertung von Konfigurationsdaten über die Erreichbarkeit des Zielteilnehmers 5 bei einem Rückruf auf einen Zeitpunkt, zu dem der Zielteilnehmer 5 bei einem Rückruf erreichbar ist. Die Konfigurationsdaten über die Erreichbarkeit des Zielteilnehmers 5 bei einem Rückruf werden in einer ersten Speichereinheit 101 hinterlegt. Die Hinterlegung der Konfigurationsdaten erfolgt durch den Zielteilnehmer 5 beispielsweise in der Form, dass der Zielteilnehmer 5 über eine Leitung 115, die Schnittstelle 109 und die Leitung 119 die Konfigurationsdaten unter Verwendung seines Endgerätes Z aus der ersten Speichereinheit 101 ausliest und neue oder geänderte Daten den Konfigurationsdaten durch Eingabe in sein Endgerät Z hinzufügt. Alternativ oder zusätzlich zum Endgerät Z kann der Zielteilnehmer 5 zur Hinterlegung von Konfigurationsdaten einen an die Leitung 119 angeschlossenen Computer (nicht dargestellt) verwenden. Die neuen oder geänderten Daten werden über die Leitung 119, die Schnittstelle 109 und die Leitung 115 in die erste Speichereinheit 101 übertragen und in der ersten Speichereinheit 101 gespeichert. Neben dem Zielteilnehmer 5 kann auch jeder Rufteilnehmer 1, 2, 3, 4 Konfigurationsdaten, beispielsweise in Form bestimmter Zeitraume, in denen der Rufteilnehmer 1, 2, 3, 4 für von der Vermittlungseinrichtung durchgeführte Rückrufe erreichbar oder nicht erreichbar ist, in der ersten Speichereinheit 101 hinterlegen. Die vom Rufteilnehmer 1, 2, 3, 4 eingegebenen neuen oder geänderten Konfigurationsdaten werden vom Rufendgerät R1, R2, R3, R4 über die Leitung 118, die Schnittstelle 108, eine Leitung 116, die Auswerteeinheit 102 und eine Leitung 112 an die erste Speichereinheit 101 übertragen und in der ersten Speichereinheit 101 gespeichert. Alternativ oder zusätzlich kann jedes Endgerät R1, R2, R3, R4 unter Umgehung der Auswerteeinheit 102 mit der ersten Speichereinheit 101 verbunden sein.

Neben dem unmittelbaren Zugriff auf die in der ersten Speichereinheit 101 hinterlegten Konfigurationsdaten durch jeden Rufteilnehmer 1, 2, 3, 4 und den Zielteilnehmer 5 ist der Zugriff auf die in der ersten Speichereinheit 101 hinterlegten Daten auch über eine erste Schnittstelle 110 möglich, mit der die erste Speichereinheit 101 verbunden ist. Über die in der Vermittlungseinrichtung 100 vorgesehene erste Schnittstelle 110 werden Daten über einen außerhalb der Vermittlungseinrichtung verwalteten Aktivitätsstatus des Zielteilnehmers 5 und/oder des Rufteilnehmers 1, 2, 3, 4 in die Konfigurationsdaten aufgenommen. Die Verwaltung der Aktivitätsstatusdaten erfolgt im vorliegenden Ausführungsbeispiel in einem Computer 104, der über die Leitung 120 mit der ersten Schnittstelle 110 verbunden ist. In die Aktivitätsstatusdaten können Daten eines Terminkalenders jedes Rufteilnehmers 1, 2, 3, 4 oder des Zielteilnehmers 5 aufgenommen werden. Die Daten des Terminkalenders können von dem Computer 104 aus Software-Programmen wie Lotus Notes oder Microsoft Outlook, die auf einem Computer (nicht dargestellt) jedes Rufteilnehmers 1, 2, 3, 4 oder des Zielteilnehmers 5 installiert sind, ausgelesen werden. Der Computer 104 leitet die Aktivitätsstatusdaten über die Leitung 120 und die erste Schnittstelle 110 an die erste Speichereinheit 101 weiter, in der die Aktivitätsstatusdaten den vorhandenen Konfigurationsdaten hinzugefügt werden. In die Aktivitätsstatusdaten können darüber hinaus Daten aufgenommen werden, die von dem Computer 104 zur Erfassung und Meldung von Nutzeraktivitäten jedes Rufteilnehmers 1, 2, 3, 4 oder des Zielteilnehmers 5 erzeugt werden. Der Computer 104 kann auch aus mehreren räumlich getrennten Einheiten bestehen, die miteinander verbunden sein können und die über die Leitung 120 und die erste Schnittstelle 110 mit der ersten Speichereinheit 101 verbunden sind.

Ein hinterlegter Rückrufwunsch CCBS-REQ; CCNR-REQ kann vor Durchführung des durchzuführenden Rückrufes RC von außerhalb der Vermittlungseinrichtung über eine in der Vermittlungseinrichtung vorgesehene zweite Schnittstelle 111 gelöscht werden. Zur Löschung ist die zweite Speichereinheit über die zweite Schnittstelle 111 mit einer Einrichtung 105 außerhalb der Vermittlungseinrichtung 100 über eine Leitung 121 verbunden. Die Einrichtung 105 kann einen Computer oder Server umfassen. Beispielsweise können auf dem Computer oder Server CEBP-Prozesse, bei denen automatisiert Telefonverbindungen ausgeführt werden, ablaufen. Es ist auch möglich, dass jeder Rufteilnehmer 1, 2, 3, 4 über sein Endgerät R1, R2, R3, R4 oder einen Computer über die Leitung 121 und die Schnittstelle 111 auf die zweite Speichereinheit 103 zur Löschung eines hinterlegten Rückrufwunsches CCBS-REQ; CCNR-REQ für einen noch nicht durchgeführten Rückruf RC zugreift (in Fig. 2 nicht dargestellt).

Nach der Hinterlegung eines Rückrufwunsches CCBS-REQ; CCNR-REQ in Form eines durchzuführenden Rückrufes RC über die Leitung 118, die Schnittstelle 108 und die Leitung 114 in der zweiten Speichereinheit 103 übernimmt die Auswerteeinheit 102 über eine Leitung 113 einen durchzuführenden Rückruf RC aus der in der zweiten Speichereinheit 103 gespeicherten Rückrufliste RL. Von der Auswerteeinheit 102 werden über eine Leitung 112 in der ersten Speichereinheit 101 hinterlegte Konfigurationsdaten über die Erreichbarkeit des Rufteilnehmers 1, 2, 3, 4 und des Zielteilnehmers 5 abgerufen. Falls die Konfigurationsdaten zum Zeitpunkt der Übernahme des durchzuführenden Rückrufs RC durch die Auswerteeinheit 102 eine Erreichbarkeit des Rufteilnehmers 1, 2, 3, 4 und des Zielteilnehmers 5 angeben, überprüft die Auswerteeinheit 102 über die Leitung 117, die Schnittstelle 109 und die Leitung 119, ob das Endgerät Z des Zielteilnehmers 5 ein Freizeichen anzeigt. Falls das Endgerät Z frei ist, erfolgt ein Rückruf der Auswerteeinheit 102 über die Leitung 116, die Schnittstelle 108 und die Leitung 118 an das Endgerät R1, R2, R3, R4 desjenigen Rufteilnehmers 1, 2, 3, 4, dessen Rückrufwunsch von der Vermittlungseinrichtung 100 verarbeitet wird. Falls der Rufteilnehmer 1,2, 3, 4 den durchzuführenden Rückruf RC annimmt und das Endgerät Z zum Zeitpunkt der Annahme des durchzuführenden Rückrufs RC durch den Rufteilnehmer 1, 2, 3, 4 frei ist, baut die Auswerteeinrichtung 102 eine zweiten Ruf, der auch Rückrufverbindung genannt wird, über die Leitung 118, die Schnittstelle 108, die Leitung 116, die Leitung 117, die Schnittstelle 109 und die Leitung 119 zum Endgerät Z des Zielteilnehmers 5 auf. Nach dem Aufbau der Rückrufverbindung wird der durchzuführende Rückruf RC von der Auswerteeinrichtung 102 über die Leitung 113 in der Rückrufliste RL, die in der zweiten Speichereinrichtung 103 gespeichert ist, gelöscht.

Die Auswerteeinheit 102 übernimmt über eine Leitung 113 den nächsten durchzuführenden Rückruf RC aus der in der zweiten Speichereinheit 103 gespeicherten Rückrufliste RL. Zum Zeitpunkt der Übernahme des nächsten durchzuführenden Rückrufs RC werden von der Auswerteeinheit 102 über eine Leitung 112 in der ersten Speichereinheit 101 hinterlegte Konfigurationsdaten über die Erreichbarkeit des den Rückrufwunsch CCBS-RREQ; CCNR-REQ initiierenden Rufteilnehmers 1, 2, 3, 4 und des Zielteilnehmers 5 abgerufen. Falls der Rufteilnehmer 1, 2, 3, 4 und/oder der Zielteilnehmer 5 nach Auswertung der Konfigurationsdaten nicht erreichbar ist, überwacht die Auswerteeinheit die Erreichbarkeit jedes Rückrufteilnehmers 1, 2, 3, 4, 5 durch Auswertung der in der ersten Speichereinheit 101 hinterlegten Konfigurationsdaten zu dem Zeitpunkt, zu dem beide Rückrufteilnehmer 1, 2, 3, 4, 5 erreichbar sind. Falls mehrere durchzuführende Rückrufe RC zum Aufbau eines zweiten Rufes an den Zielteilnehmer 5 in der zweiten Speichereinheit 103 vorliegen, priorisiert die Auswerteeinrichtung 102 über die Leitung 113 die Reihenfolge der durchzuführenden Rückrufe RC in der zweiten Speichereinheit 103 durch Zugriff der Auswerteeinheit 102 über die Leitung 112 auf die in der ersten Speichereinheit 101 hinterlegten Konfigurationsdaten und Auswertung der Konfigurationsdaten.

Zum Zeitpunkt der Erreichbarkeit beider Rückrufteilnehmer erfolgt der Rückruf des Rufteilnehmers 1, 2, 3, 4, der den zu verarbeitenden Rückrufwunsch CCBS-REQ; CCNR-REQ in der zweiten Speichereinheit hinterlegt hat, durch die Auswerteinrichtung 102 zum Aufbau des zweite Rufes an den Zielteilnehmer 5.

Eines oder mehrere der unter Bezug auf die dargestellten Ausführungsformen beschriebenen Merkmale der Erfindung, beispielsweise die Verwaltung der Aktivitätsstatusdaten in dem Computer 104, der über die Leitung 120 mit der ersten Schnittstelle 110 verbunden ist gemäß Fig. 2 und der korrespondierenden Beschreibung, können auch bei anderen Ausführungsformen der Erfindung, beispielsweise bei mehr als den 4 Rufteilnehmern 1 bis 4 gemäß Fig. 2 und der korrespondierenden Beschreibung, vorhanden sein, außer wenn es anders angegeben ist oder sich aus technischen Gründen von selbst verbietet.

## Patentansprüche

1. Verfahren zum Aufbau einer Telekommunikationsverbindung zwischen einem Rufteilnehmer (1) und einem Zielteilnehmer (5), bei dem ein Rufendgerät (R) des Rufteilnehmers (1) und ein Zielendgerät (Z) des Zielteilnehmers (5) einer Vermittlungseinrichtung (100) zugeordnet sind und der Rufteilnehmer (1) einen Rückrufwunsch, CCBS-REQ; CCNR-REQ, in der Vermittlungseinrichtung (100) hinterlegt, wenn das Zielendgerät (Z) bei einem vom Rufendgerät (R) zum Zielendgerät (Z) aufgebauten ersten Ruf besetzt oder nicht erreichbar ist, mit den folgenden Schritten:
- Hinterlegung von Konfigurationsdaten in der Vermittlungseinrichtung (100) über die Erreichbarkeit des Zielteilnehmers (5) bei einem Rückruf,
- Festlegung des Zeitpunktes der Durchführung des von der Vermittlungseinrichtung (100) durchzuführenden Rückrufes (RC) an den Rufteilnehmer (1) zum Aufbau eines zweiten Rufes an den Zielteilnehmer (5) durch Auswertung der Konfigurationsdaten über die Erreichbarkeit des Zielteilnehmers (5) bei einem Rückruf auf einen Zeitpunkt, zu dem der Zielteilnehmer (5) bei einem Rückruf erreichbar ist, und
- Durchführung des von der Vermittlungseinrichtung (100) durchzuführenden Rückrufes (RC) an den Rufteilnehmer (1) zum festgelegten Zeitpunkt, **dadurch gekennzeichnet, dass**
- ein Rückrufwunsch, CCBS-REQ; CCNR-REQ, von der Vermittlungseinrichtung (100) in ein außerhalb der Vermittlungseinrichtung (100) verwaltetes Terminplanungssystem oder Konferenzsystem übertragen wird.

2. Verfahren nach Anspruch 1, bei dem
von der Vermittlungseinrichtung (100) durchzuführende Rückrufe (RC) an zumin dest zwei Rufteilnehmer (1, 2, 3, 4) zum Aufbau eines zweiten Rufes an den Zielteilnehmer (5) durch Auswertung der Konfigurationsdaten über die Erreichbarkeit des Zielteilnehmers (5) bei einem Rückruf priorisiert werden und der Zeitpunkt der Durchführung des von der Vermittlungseinrichtung (100) durchzuführenden Rückrufes (RC) an jeden der zumindest zwei Rufteilnehmer (1, 2, 3, 4) durch die priorisierte Reihenfolge der durchzuführenden Rückrufe (RC) festgelegt wird.

3. Verfahren nach Anspruch 1 oder 2, bei dem
nach der Hinterlegung des Rückrufwunsches, CCBS-REQ; CCNR-REQ, eine Rückmeldung der Vermittlungseinrichtung (100) an den Rufteilnehmer (1, 2, 3, 4) über die Erreichbarkeit des Zielteilnehmers (5) erfolgt.

4. Verfahren nach einem der Ansprüche 1 bis 3, bei dem
die Konfigurationsdaten durch den Zielteilnehmer (5) veränderbar sind.

5. Verfahren nach Anspruch 4, bei dem
in die Konfigurationsdaten Daten über einen vorrangig rückzurufenden Rufteilnehmer (1, 2, 3, 4) aufgenommen werden.

6. Verfahren nach einem der vorhergehenden Ansprüche, bei dem
in die Konfigurationsdaten Daten über einen Zeitraum aufgenommen werden, in dem der Zielteilnehmer (5) und/oder der Rufteilnehmer (1, 2, 3, 4) für Rückrufe erreichbar oder nicht erreichbar sind/ist.

7. Verfahren nach einem der vorhergehenden Ansprüche, bei dem
in die Konfigurationsdaten Daten über einen außerhalb der Vermittlungseinrichtung (100) verwalteten Aktivitätsstatus des Zielteilnehmers (5) und/oder des Rufteilnehmers (1, 2, 3, 4) über eine in der Vermittlungseinrichtung (100) vorgesehene erste Schnittstelle (110) aufgenommen werden.

8. Verfahren nach Anspruch 7, bei dem
in die Aktivitätsstatusdaten Daten, die von einem Computer (104) zur Erfassung und Meldung von Nutzeraktivitäten des Zielteilnehmers (5) und/oder des Rufteilnehmers (1, 2, 3, 4) erzeugt werden, aufgenommen werden.

9. Verfahren nach einem der vorhergehenden Ansprüche, bei dem das Rufendgerät (R) des Rufteilnehmers (1, 2, 3, 4) und das Zielendgerät (Z) des Zielteilnehmers (5) vor dem Aufbau des durchzuführenden Rückrufs (RC) zum Aufbau des zweiten Rufes an den Zielteilnehmer (5) für von dem zweiten Ruf verschiedene Rufe gesperrt werden.

10. Verfahren nach einem der vorhergehenden Ansprüche, bei dem ein hinterlegter Rückrufwunsch, CCBS-REQ; CCNR-REQ, vor Durchführung des durchzuführenden Rückrufes (RC) von außerhalb der Vermittlungseinrichtung (100) über eine in der Vermittlungseinrichtung (100) vorgesehene zweite Schnittstelle (111) gelöscht wird.

11. Verfahren nach einem der vorhergehenden Ansprüche, **dadurch gekennzeichnet, dass**
- in die Konfigurationsdaten Daten über Sperrzeiten (22, 51) aufgenommen werden, in denen der Zielteilnehmer (5) und/oder der Rufteilnehmer (1, 2, 3, 4) für Rückrufe nicht erreichbar sind/ist,
- wobei vor einem geplanten Anruf und/oder nach einem getätigten Anruf für eine konfigurierbare Sperrzeit (22, 51) kein Rückruf erfolgt, um Gesprächsaktivitäten der Teilnehmer an der aufzubauenden Kommunikationsverbindung zu berücksichtigen.

12. Vermittlungseinrichtung (100), insbesondere zur Durchführung des Verfahrens eines der Ansprüche 1 bis 12, zum Aufbau einer Telekommunikationsverbindung zwischen einem Rufteilnehmer (1) und einem Zielteilnehmer (5), bei der ein Rufendgerät (R) des Rufteilnehmers (1) und ein Zielendgerät (Z) des Zielteilnehmers (5) der Vermittlungseinrichtung (100) zugeordnet sind und ein Rückrufwunsch, CCBS-REQ; CCNR-REQ, von dem Rufteilnehmer (1) in der Vermittlungseinrichtung (100) hinterlegbar ist, wenn das Zielendgerät (Z) bei einem vom Rufendgerät (R) zum Zielendgerät (Z) aufgebauten ersten Ruf besetzt oder nicht erreichbar ist, umfassend:
- eine erste Speichereinheit (101) zur Hinterlegung von Konfigurationsdaten über die Erreichbarkeit des Zielteilnehmers (5) bei einem Rückruf, und
- eine Auswerteeinheit (102) zur Festlegung des Zeitpunktes der Durchführung des von der Vermittlungseinrichtung (100) durchzuführenden Rückrufes (RC) an den Rufteilnehmer (1) zum Aufbau eines zweiten Rufes an den Zielteilnehmer (5) durch Auswertung der Konfigurationsdaten über die Erreichbarkeit des Zielteilnehmers (5) bei einem Rückruf auf einen Zeitpunkt, zu dem der Zielteilnehmer (5) bei einem Rückruf erreichbar ist, wobei
- die Vermittlungseinrichtung (100) so ausgeführt ist, dass der von der Vermittlungseinrichtung (100) durchzuführende Rückruf (RC) an den Rufteilnehmer (1) zum festgelegten Zeitpunkt erfolgt
- **dadurch gekennzeichnet, dass**
- die Vermittlungseinrichtung (100) konfiguriert ist, um einen Rückrufwunsch, CCBS-REQ; CCNR-REQ, in ein außerhalb der Vermittlungseinrichtung (100) verwaltetes Terminplanungssystem oder Konferenzsystem zu übertragen.

13. Vermittlungseinrichtung nach Anspruch 12, wobei
die Auswerteeinheit so ausgeführt ist, dass von der Vermittlungseinrichtung (100) durchzuführende Rückrufe (RC) an zumindest zwei Rufteilnehmer (1, 2, 3, 4) zum Aufbau eines zweiten Rufes an den Zielteilnehmer (5) durch Auswertung der Konfigurationsdaten über die Erreichbarkeit des Zielteilnehmers (5) bei einem Rückruf priorisierbar sind, und der Zeitpunkt der Durchführung des von der Vermittlungseinrichtung (100) durchzuführenden Rückrufes (RC) an jeden der zumindest zwei Rufteilnehmer (1, 2, 3, 4) zum Aufbau des zweiten Rufes an den Zielteilnehmer (5) durch die priorisierte Reihenfolge der durchzuführenden Rückrufe (RC) festgelegt ist.

14. Vermittlungseinrichtung nach Anspruch 12 oder 13, wobei der Rückrufwunsch, CCBS-REQ; CCNR-REQ, in Form eines von der Vermittlungseinrichtung (100) durchzuführenden Rückrufs (RC) in einer Rückrufliste (RL) in einer zweiten Speichereinheit (103) der Vermittlungseinrichtung (100) gespeichert ist, und die Rückrufliste (RL) von der Vermittlungseinrichtung (100) durchzuführende Rückrufe (RC) zum Aufbau eines zweiten Rufes an den Zielteilnehmer (5) umfasst.

15. Vermittlungseinrichtung nach Anspruch 12 , 13 oder 14,
**dadurch gekennzeichnet, dass**
- in die Konfigurationsdaten Daten über Sperrzeiten (22, 51) aufgenommen sind, in denen der Zielteilnehmer (5) und/oder der Rufteilnehmer (1, 2, 3, 4) für Rückrufe nicht erreichbar sind/ist,
- wobei vor einem geplanten Anruf und/oder nach einem getätigten Anruf für eine konfigurierbare Sperrzeit (22, 51) kein Rückruf erfolgt, um Gesprächsaktivitäten der Teilnehmer an der aufzubauenden Kommunikationsverbindung zu berücksichtigen..

## Claims

1. A method for establishing a telecommunication connection between a calling subscriber (1) and a target subscriber (5), wherein a calling terminal (R) of the calling subscriber (1) and a target terminal (Z) of the target subscriber (5) are associated with a switching device (100) and the calling subscriber (1) stores a callback request, CCBS-REQ; CCNR-REQ, in the switching device (100) if the target terminal (Z) is busy or not available in a first call established from the calling terminal (R) to the target terminal (Z), comprising the following steps:
- storing configuration data about the availability of the target subscriber (5) in a callback in the switching device (100),
- defining the time of performing the callback (RC) to the calling subscriber (1) to be performed by the switching device (100) to establish a second call to the target subscriber (5) as a time when the target subscriber (5) is available in a callback by evaluating the configuration data about the availability of the target subscriber (5), and
- performing the callback (RC) to the calling subscriber (1) to be performed by the switching device (100) at the defined time,
**characterized in that**
- a callback request, CCBS-REQ; CCNR-REQ, is transmitted by the switching device (100) to a scheduling system or conference system managed outside of the switching device (100).

2. The method as claimed in claim 1, wherein
callbacks (RC) to at least two calling subscribers (1, 2, 3, 4) to be performed by the switching device (100) to establish a second call to the target subscriber (5) are prioritized by evaluating the configuration data about the availability of the target subscriber (5) in a callback, and the time of performing the callback (RC) to each of the at least two calling subscribers (1, 2, 3, 4) to be performed by the switching device (100) is defined by the prioritized order of the callbacks (RC) to be performed.

3. The method as claimed in claim 1 or 2, wherein
after storing the callback request, CCBS-REQ; CCNR-REQ, an acknowledgement message about the availability of the target subscriber (5) is transmitted from the switching device (100) to the calling subscriber (1, 2, 3, 4).

4. The method as claimed in any one of claims 1 to 3, wherein the configuration data are able to be changed by the target subscriber (5).

5. The method as claimed in claim 4, wherein
data about a higher-priority calling subscriber (1, 2, 3, 4) to be called back is included in the configuration data.

6. The method as claimed in any one of the preceding claims, wherein
data about a period in which the target subscriber (5) and/or the calling subscriber (1, 2, 3, 4) is/are available or not available for callbacks is included in the configuration data.

7. The method as claimed in any one of the preceding claims, wherein
data about an activity status of the target subscriber (5) and/or the calling subscriber (1, 2, 3, 4) managed outside of the switching device (100) is included in the configuration data via a first interface (110) provided in the switching device (100).

8. The method as claimed in claim 7, wherein
data generated by a computer (104) for recording and reporting user activities of the target subscriber (5) and/or the calling subscriber (1, 2, 3, 4) is included in the activity status data.

9. The method as claimed in any one of the preceding claims, wherein
the calling terminal (R) of the calling subscriber (1, 2, 3, 4) and the target terminal (Z) of the target subscriber (5) are blocked for calls other than the second call prior to establishing the callback (RC) to be performed to establish the second call to the target subscriber (5).

10. The method as claimed in any one of the preceding claims, wherein
a stored callback request, CCBS-REQ; CCNR-REQ, is deleted from outside of the switching device (100) via a second interface (111) provided in the switching device (100) prior to performing the callback (RC) to be performed.

11. The method as claimed in any one of the preceding claims, **characterized in that**
- data about blocking times (22, 51) in which the target subscriber (5) and/or the calling subscriber (1, 2, 3, 4) is/are not available for callbacks is included in the configuration data,
- wherein no callback is performed for a configurable blocking time (22, 51) prior to a scheduled call and/or after a call is made to take into account conversation activities of the subscribers in the communication connection to be established.

12. A switching device (100), in particular for performing the method as claimed in any one of claims 1 to 12, for establishing a telecommunication connection between a calling subscriber (1) and a target subscriber (5), wherein a calling terminal (R) of the calling subscriber (1) and a target terminal (Z) of the target subscriber (5) are associated with the switching device (100), and a callback request, CCBS-REQ; CCNR-REQ, is able to be stored by the calling subscriber (1) in the switching device (100) if the target terminal (Z) is busy or not available in a first call established from the calling terminal (R) to the target terminal (Z), comprising:
- a first storage unit (101) for storing configuration data about the availability of the target subscriber (5) in a callback, and
- an evaluation unit (102) for defining the time of performing the callback (RC) to the calling subscriber (1) to be performed by the switching device (100) to establish a second call to the target subscriber (5) as a time at which the target subscriber (5) is available in a callback by evaluating the configuration data about the availability of the target subscriber (5), wherein
- the switching device (100) is adapted such that the callback (RC) to the calling subscriber (1) to be performed by the switching device (100) is performed at the defined time,
- **characterized in that**
- the switching device (100) is configured to transmit a callback request, CCBS-REQ; CCNR-REQ, to a scheduling system or conference system managed outside of the switching device (100).

13. The switching device as claimed in claim 12, wherein
the evaluation unit is adapted such that callbacks (RC) to at least two calling subscribers (1, 2, 3, 4) to be performed by the switching device (100) to establish a second call to the target subscriber (5) are able to be prioritized by evaluating the configuration data about the availability of the target subscriber (5) in a callback, and the time of performing the callback (RC) to each of the at least two calling subscribers (1, 2, 3, 4) to be performed by the switching device (100) to establish the second call to the target subscriber (5) is defined by the prioritized order of the callbacks (RC) to be performed.

14. The switching device as claimed in claim 12 or 13, wherein the callback request, CCBS-REQ; CCNR-REQ, is stored in a second storage unit (103) of the switching device (100) in the form of a callback (RC) in a callback list (RL) to be performed by the switching device (100), and the callback list (RL) comprises callbacks (RC) to be performed by the switching device (100) to establish a second call to the target subscriber (5).

15. The switching device as claimed in claim 12, 13 or 14, **characterized in that**
- data about blocking times (22, 51) in which the target subscriber (5) and/or the calling subscriber (1, 2, 3, 4) is/are not available for callbacks is included in the configuration data,
- wherein no callback is performed for a configurable blocking time (22, 51) prior to a scheduled call and/or after a call is made to take into account conversation activities of the subscribers in the communication connection to be established.

## Revendications

1. Procédé d'établissement d'une liaison de télécommunication entre un abonné appelant (1) et un abonné cible (5), dans lequel un terminal d'appel (R) de l'abonné appelant (1) et un terminal cible (Z) de l'abonné cible (5) sont associés à un dispositif autocommutateur (100) et l'abonné appelant (1) dépose une demande de rappel, CCBS-REQ ; CCNR-REQ, dans le dispositif autocommutateur (100) lorsque le terminal cible (Z) est occupé ou n'est pas accessible lors d'un premier appel établi par le terminal d'appel (R) vers le terminal cible (Z), avec les étapes suivantes :
- le dépôt de données de configuration dans le dispositif autocommutateur (100) au sujet de l'accessibilité de l'abonné cible (5) lors d'un rappel,
- la détermination de l'instant de l'exécution du rappel (RC) à effectuer par le dispositif autocommutateur (100) à l'abonné appelant (1) pour l'établissement d'un second appel à l'abonné cible (5) par évaluation des données de configuration au sujet de l'accessibilité de l'abonné cible (5) lors d'un rappel à un instant auquel l'abonné cible (5) peut être joint lors d'un rappel, et
- l'exécution du rappel (RC) à exécuter par le dispositif autocommutateur (100) à l'abonné appelant (1) à l'instant déterminé,
**caractérisé en ce que**
une demande de rappel, CCBS-REQ ; CCNR-REQ, est transmise par le dispositif autocommutateur (100) dans un système de planification de rendez-vous ou un système de conférence géré en dehors du dispositif autocommutateur (100).

2. Procédé selon la revendication 1, dans lequel des rappels (RC) à exécuter par le dispositif autocommutateur (100) à au moins deux abonnés appelants (1, 2, 3, 4) pour l'établissement d'un second appel à l'abonné cible (5) sont prioritisés par une évaluation des données de configuration au sujet de l'accessibilité de l'abonné cible (5) lors d'un rappel, et l'instant de l'exécution du rappel (RC) à exécuter par le dispositif autocommutateur (100) à chacun des au moins deux abonnés appelants (1, 2, 3, 4) est déterminé par la séquence prioritisée des rappels (RC) à exécuter.

3. Procédé selon la revendication 1 ou 2, dans lequel après le dépôt de la demande de rappel, CCBS-REQ ; CCNR-REQ, a lieu un message d'acquittement du dispositif autocommutateur (100) à l'abonné appelant (1, 2, 3, 4) au sujet de l'accessibilité de l'abonné cible (5).

4. Procédé selon l'une quelconque des revendications 1 à 3, dans lequel les données de configuration sont modifiables par l'abonné cible (5).

5. Procédé selon la revendication 4, dans lequel dans les données de configuration sont enregistrées des données au sujet d'un abonné appelant (1, 2, 3, 4) rappelant de manière prioritaire.

6. Procédé selon l'une quelconque des revendications précédentes, dans lequel dans les données de configuration sont entreposées des données au sujet d'une période dans laquelle l'abonné cible (5) ou/et l'abonné appelant (1, 2, 3, 4) est/sont accessible(s) ou non pour des rappels.

7. Procédé selon l'une quelconque des revendications précédentes, dans lequel dans les données de configuration sont enregistrées des données au sujet d'un état d'activité de l'abonné cible (5) et/ou de l'abonné appelant (1, 2, 3, 4) géré en dehors du dispositif autocommutateur (100) par le biais d'une première interface (110) prévue dans le dispositif autocommutateur (100).

8. Procédé selon la revendication 7, dans lequel dans les données d'état d'activités sont enregistrées des données, qui sont générées par un ordinateur (104) pour la détection et l'annonce d'activités d'utilisateur de l'abonné cible (5) et/ou de l'abonné appelant (1, 2, 3, 4).

9. Procédé selon l'une quelconque des revendications précédentes, dans lequel le terminal d'appel (R) de l'abonné appelant (1, 2, 3, 4) et le terminal cible (Z) de l'abonné cible (5) sont bloqués pour des appels différents du second appel avant l'établissement du rappel (RC) à exécuter en vue de l'établissement du second appel à l'abonné cible (5).

10. Procédé selon l'une quelconque des revendications précédentes, dans lequel une demande de rappel déposée, CCBS-REQ ; CCNR-REQ, est supprimée avant l'exécution du rappel (RC) à exécuter depuis l'extérieur du dispositif autocommutateur (100) par le biais d'une seconde interface (111) prévue dans le dispositif autocommutateur (100).

11. Procédé selon l'une quelconque des revendications précédentes, **caractérisé en ce que**
- dans les données de configuration sont enregistrées des données au sujet de temps de blocage (22, 51) durant lesquels l'abonné cible (5) ou/et l'abonné appelant (1, 2, 3, 4) n'est/ne sont pas accessibles pour des rappels,
- dans lequel, avant un appel planifié et/ou après un appel réalisé, aucun rappel n'a lieu pour un temps de blocage configurable (22, 51) afin de tenir compte d'activités conversationnelles des abonnés à la liaison de communication à établir.

12. Dispositif autocommutateur (100), en particulier pour l'exécution du procédé selon une des revendications 1 à 12, pour l'établissement d'une liaison de télécommunication entre un abonné appelant (1) et un abonné cible (5), dans lequel un terminal d'appel (R) de l'abonné appelant (1) et un terminal cible (Z) de l'abonné cible (5) sont associés au dispositif autocommutateur (100) et une demande de rappel, CCBS-REQ ; CCNR-REQ, peut être déposée par l'abonné appelant (1) dans le dispositif autocommutateur (100) lorsque le terminal cible (Z) est occupé ou n'est pas accessible lors d'un premier appel établi par le terminal d'appel (R) vers le terminal cible (Z), comportant :
- une première unité de stockage (101) pour le dépôt de données de configuration au sujet de l'accessibilité de l'abonné cible (5) lors d'un rappel, et
- une unité d'évaluation (102) pour la détermination de l'instant de l'exécution du rappel (RC) à exécuter par le dispositif autocommutateur (100) à l'abonné appelant (1) pour l'établissement d'un second appel à l'abonné cible (5) par une évaluation des données de configuration au sujet de l'accessibilité de l'abonné cible (5) lors d'un rappel à un instant auquel l'abonné cible (5) est accessible lors d'un rappel, dans lequel
- le dispositif autocommutateur (100) est conçu de sorte que le rappel (RC) à exécuter par le dispositif autocommutateur (100) à l'abonné appelant (1) a lieu à l'instant déterminé
- **caractérisé en ce que**
- le dispositif autocommutateur (100) est configuré pour transmettre une demande de rappel, CCBS-REQ ; CCNR-REQ, dans un système de planification de rendez-vous ou un système de conférence géré en dehors du dispositif autocommutateur (100).

13. Dispositif autocommutateur selon la revendication 12, dans lequel
l'unité d'évaluation est conçue de sorte que des rappels (RC) à exécuter par le dispositif autocommutateur (100) à au moins deux abonnés appelants (1, 2, 3, 4) pour l'établissement d'un second appel à l'abonné cible (5) peuvent être prioritisés par une évaluation des données de configuration au sujet de l'accessibilité de l'abonné cible (5) lors d'un rappel, et l'instant de l'exécution du rappel (RC) à exécuter par le dispositif autocommutateur (100) à chacun des au moins deux abonnés appelants (1, 2, 3, 4) pour l'établissement du second appel à l'abonné cible (5) est déterminé par la séquence prioritisée des rappels (RC) à exécuter.

14. Dispositif autocommutateur selon la revendication 12 ou 13, dans lequel la demande de rappel, CCBS-REQ ; CCNR-REQ, est stockée sous forme d'un rappel (RC) à exécuter par le dispositif autocommutateur (100) dans une liste de rappels (RL) dans une seconde unité de stockage (103) du dispositif autocommutateur (100) et la liste de rappels (RL) comporte des rappels (RC) à exécuter par le dispositif autocommutateur (100) pour l'établissement d'un second appel à l'abonné cible (5).

15. Dispositif autocommutateur selon la revendication 12, 13 ou 14, **caractérisé en ce que**
- dans les données de configuration sont enregistrées des données au sujet de temps de blocage (22, 51) durant lesquels l'abonné cible (5) ou/et l'abonné appelant (1, 2, 3, 4) est/sont accessible(s) pour des rappels,
- dans lequel, avant un appel planifié et/ou après un appel réalisé pour un temps de blocage configurable (22, 51), aucun rappel n'a lieu pour tenir compte d'activités conversationnelles des abonnés à la liaison de communication à établir.
